Europäisches Patentamt

European Patent Office

Office européen des brevets

(11) Publication number: **0 087 825**
**B1**

# EUROPEAN PATENT SPECIFICATION

(45) Date of publication of patent specification: **30.03.88**

(21) Application number: **83200110.1**

(22) Date of filing: **25.01.83**

(51) Int. Cl.⁴: **C 04 B 35/00,** C 04 B 35/02 //
C21C5/44

(54) **Process for the manufacture of refractory elements.**

(30) Priority: **25.02.82 GB 8205580**

(43) Date of publication of application:
**07.09.83 Bulletin 83/36**

(45) Publication of the grant of the patent:
**30.03.88 Bulletin 88/13**

(84) Designated Contracting States:
**AT BE DE FR GB IT LU NL SE**

(56) References cited:
**GB-A-1 012 296**
**GB-A-1 071 536**
**GB-A-1 158 650**
**GB-A-1 441 095**
**GB-A-2 050 400**
**GB-A-2 096 985**
**US-A-3 448 069**
**US-A-4 210 453**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Makansi, Isam
Badhuisweg 3
NL-1031 CM Amsterdam (NL)**
Inventor: **Green, John Malcolm
Westervoortsedijk 67 D
NL-6827 AT Arnhem (NL)**

(74) Representative: **Aalbers, Onno et al
P.O. Box 302
NL-2501 CH The Hague (NL)**

Courier Press, Leamington Spa, England.

**0 087 825**

**Description**

This invention relates to a process for the manufacture of refractory elements, such as blocks, bricks or tiles for formation of refractory walls, for example in steel-making furnaces.

In conventional refractory elements a refractory material such as magnesia or dolomite is mixed with molten tar or pitch e.g. at 100 to 200°C and the resulting refractory composition is moulded, also at elevated temperature, e.g. 100 to 200°C. After cooling the moulded elements become rigid, but before they are used they are generally tempered by heating to a temperature in the range 200 to 350°C in order to drive off volatile components of the tar or pitch. Vapours evolved during such processing are noxious.

After the refractory elements have been built into refractory walls of a furnace they are burned in before the furnace is used. Incandescent coke is placed in the furnace and the walls are subjected to temperatures of the order of 1000 to 1200°C. If the tar- or pitch-bonded elements have not been tempered, the elements may soften during burning in, causing the walls to collapse.

It has been proposed to substitute thermosetting resins for at least part of the tar or pitch binder in refractory elements but in all such proposals elevated temperatures have to be employed for at least one of the mixing, moulding and curing stages in manufacture, and in some cases it is still necessary to temper the elements before their incorporation in refractory walls.

Thus, U.K. Patent Specification No. 1,071,536 provides refractory elements wherein magnesia-containing refractory material is bonded by a thermosetting resin which requires to be heated at a temperature from about 150 to 260°C for 6 to 24 hours to cure the thermosetting resin.

U.K. Patent Specification No. 1,373,941 describes refractory elements wherein a resin may be used as binder for the refractory material. However, elevated temperatures still have to be employed. At least the refractory material is heated, to 100 to 500°C, for mixing with the binder, and tempering of the formed brick may still be required.

Cold setting binder compositions for refractory moulded articles are known from GB—A—2,050,400 and US—A—4,036,798. The former publication is concerned with binder compositions comprising a resin component, a curing agent and a drying oil, the cold cure operation must be preceded by heating to drive off volatile material, if not, the moulded article will have an unattractively low viscosity. US—A—4,036,798 is concerned with binder compositions comprising a phenolic resin of the novolak type, such resins can be set at temperatures lower than 100°C when cured with acids used in 20 to 70%w of aqueous solutions. Subsequent to moulding, the compositions are hardened at temperatures of from 80 to 250°C.

According to the present invention there is provided a process for the manufacture of tiles or bricks for the lining of furnaces by mixing a refractory composition containing a refractory material and a resin binder, moulding the refractory elements from the refractory composition and curing within the temperature range 0 to 40°C, wherein the binder comprises components of a liquid binder composition which is curable at a temperature in the range 0 to 40°C, characterized in that the refractory composition comprises magnesia and graphite and in that the binder comprises a liquid epoxy resin and an amine hardener with at least two amino hydrogen atoms per molecule or a combination of a polyhydroxy compound and a reactive polyisocyanate.

The liquid binder composition may conveniently comprise a polyhydroxy compound such as a hydroxy-terminated polyether or polyester, e.g. "Caradol 36-3" ("Caradol" is a registered Trade Mark), "Cardura LR-33" ("Cardura" is a registered Trade Mark or "Nourypol 200" ("Nourypol" is a registered Trade Mark) with a reactive polyisocyanate, such as diphenylmethane diisocyanate or toluene diisocyanate or a derivative thereof (e.g. "Desmodur L75" or "Desmodur VL" ("Desmodur" is a registered Trade Mark) as hardener. However, the components of the liquid binder composition preferably comprise, as hardenable component, a liquid epoxy resin and, as hardener component, an amine hardener. It is preferred for the liquid epoxy resin to contain from 60 to 100% by weight of a polyglycidyl ether of 2,2-bis(4-hydroxyphenyl)propane ("Bisphenol A"), having an epoxy group content in the range 4000—5880 mmol/kg, and, as viscosity modifier, from 0 to 40% wt of a low viscosity monoglycidyl reactive diluent such as butyl glycidyl ether, phenyl glycidyl ether, cresyl glycidyl ether, glycidyl esters of saturated aliphatic carboxylic acids having 9 to 11 carbon atoms per molecule wherein the carbon atom of the carboxyl group is bound to a tertiary or quaternary carbon atom or $C_{12-14}$ aliphatic glycidyl ethers; or the diglycidyl ether of ethylene glycol or the diglycidyl ester of 2,2,4-trimethyladipic acid.

The amine hardener will contain an amino compound having on average more than two amino-hydrogen atoms per molecule. The amino compound may be an aliphatic, cycloaliphatic or aromatic primary polyamine or it may be a reaction product of such a polyamine with an epoxide, a phenol or an aldehyde. Examples of suitable such polyamines are ethylene diamine, diethylene triamine, triethylene tetramine, cyclohexylpropylene diamine, diaminocyclohexyl methane, dimethyldiaminodicyclohexyl methane, isophorondiamine (i.e. 3,5,5-trimethyl-3-aminomethylcyclohexyl amine), xylylene diamine (i.e. di(aminomethyl)benzene), diaminodiphenyl methane or diaminodiphenyl sulphone. The amino compound is preferably a polyamine *per se*, or the reaction product of a polyamine with one of the low viscosity monoglycidyl reactive diluents listed above. Triethylene tetramine, cyclohexylpropylene diamine, dimethyldiaminodicyclohexyl methane and the adduct of diaminodiphenyl methane with *n*-butylglycidyl ether have been found to be very suitable amino compounds. Where necessary the amine

2

hardener may contain up to 30% wt of one or more non-reactive diluents and/or curing accelerators such as dibutyl phthalate, benzyl alcohol, phenol, cresols, xylenols or salicylic acid.

The relative proportions of liquid epoxy resin and amine hardener are those generally employed in the curable binder art, typically from 0.8 to 1.2 amine-hydrogen equivalent per epoxy equivalent.

Additional components for the liquid binder composition may also be present, for example low-volatile liquid extenders such as anthracene oil, pine oil, coal tar, refined coal tars or pitches or aromatic extracts of petroleum or coal tar distillates, e.g. in amounts up to 50% wt of the binder composition.

The refractory composition contains magnesia and graphite. The refractory composition may also contain an organic solvent which is compatible with the components of the liquid binder composition. The organic solvent is preferably present in the refractory composition when carbon black is also present, in order to counteract the sorptive properties of the carbon black. The organic solvent may be selected from ketones, alcohols, esters, glycol ethers, aromatic solvents and homogeneous mixtures thereof, e.g. acetone, xylene or butanol. The carbon black is preferably a high-structure carbon black as used in conductive elastomers. Such carbon blacks are characterized by fine particle size and low volume resistivity.

In a preferred process in accordance with the invention the refractory composition contains 99 to 47.5% wt of the refractory material, up to 35% wt of graphite, 0 to 5% wt of carbon black, 1 to 10% wt of the components of the liquid binder composition and 0 to 2.5% wt of an organic solvent which is compatible with the components of the liquid binder composition, provided that the amount of organic solvent is from 0 to 25% wt based on the weight of the components of the liquid binder composition.

Preferably the refractory composition contains 8 to 16% wt of graphite, 0 to 2% wt of carbon black, 0 to 0.5% wt of the organic solvent, and 1.5 to 8% wt of the components of the liquid binder composition.

The process of the invention is preferably carried out entirely at ambient temperature, provided that ambient temperature is at least 0°C. Those skilled in the curable binder art will know how to select the components of the liquid binder composition in order to obtain optimal handling and curing properties at a particular ambient temperature within the range 0 to 40°C. By effecting the process entirely at ambient temperature, heating costs of manufacturing refractory elements may be eliminated. However, if ambient temperature is low within the range 0 to 40°C and a suitable source of waste heat can be applied to the moulded refractory elements so that curing is effected nearer to 40°C, faster curing will result and overall manufacture time will be reduced.

The process of the invention is not restricted to any particular order of mixing of the various components of the refractory composition. However, those skilled in the curable binder art will appreciate that it is advantageous to mix together the components of the liquid binder composition and then to mix the binder composition with the refractory material. Graphite may conveniently be mixed with the refractory material before addition of the liquid binder composition. Carbon black and the organic solvent, when employed, may conveniently be mixed with the components of the liquid binder composition before mixing of the binder composition with the refractory material.

The refractory elements obtained by the process as claimed may be built into refractory walls of a furnace, and the refractory walls may be burned in directly, no previous tempering of the elements being necessary. The invention further includes refractory walls, before and after burning in, made from refractory elements prepared by the process of the invention.

The invention will be further understood from the following illustrative Examples.

Examples 1 to 8

1 kilogram batches of refractory compositions were based on high-quality deadburned magnesia. The magnesia was derived by conventional known methods from a magnesium chloride brine via magnesium hydroxide, which was subjected to a two-step firing process to produce the magnesia. The magnesia was mixed at ambient temperature (20°C) with refractory grade natural graphite in an Eirich RV 05 high intensity mixer for 5 minutes.

Binder components were mixed together, also at ambient temperature (20°C) (with carbon black, acetone or xylene/butanol when incorporated in the composition) and the resulting mixture was added to the magnesia-graphite blend in the Eirich mixer. Mixing was continued for a further 5 minutes and the resulting refractory composition was removed from the mixer for moulding.

Refractory composition was introduced into a steel form provided with double-acting plungers and the filled form was placed between platens of a hydraulic press. Pressure was applied and preset maximum compaction pressure of 150 MPa was maintained for 30 seconds. Pressure was then released and the resulting moulded elements, which were sufficiently strong to be handled, were removed from the form and allowed to cure for 16 hours at ambient temperature (20°C).

The magnesia used had the following oxide analysis:

|  | % |
|---|---|
| MgO | 98 |
| CaO | 0.7 |
| SiO$_2$ | 0.1 |
| Fe$_2$O$_3$ | 0.5 |
| Al$_2$O$_3$ | 0.1 |
| B$_2$O$_3$ | 0.02 |
| MnO$_2$ | 0.1 |
| Others | 0.48 |
| Bulk density | 3.48 g/ml |

The carbon black was as used in the conductive elastomer art and was what is known in that art as a high structure carbon black.

Details of the compositions and of the properties of the refractory elements are given in the following Table 1, quantities being expressed as % wt of the composition. Bulk densities of the cured elements were assessed by weighing and measuring. Pieces sawn from the cured elements were used to determine crushing strength, residual carbon content, weight loss on ignition and apparent carbon yield. Crushing strengths were measured on a hydraulic testing machine in the direction of original compaction, according to the procedure prescribed in the European Federation of Manufacturers of Refractory Products recommendation PRE/R 14. Residual carbon content, weight loss on ignition and apparent carbon yield were determined according to the American National Standard ASTM C 831—76.

TABLE 1

| Example<br>Total magnesia | | 1<br>90.7 | 2<br>80.3 | 3<br>87.8 | 4<br>87.8 | 5<br>87.33 | 6<br>85.7 | 7<br>87.48 | 8<br>87.8 |
|---|---|---|---|---|---|---|---|---|---|
| % w of total | Particle size (mm) range | | | | | | | | |
| Magnesia in given particle size ranges 26.7 | 7—4 | 20.0 | 20.0 | 22.2 | 22.2 | 22.2 | 22.2 | 22.2 | 22.2 |
| | 4—2 | 16.0 | 16.0 | 17.8 | 17.8 | 17.8 | 17.8 | 17.8 | 17.8 |
| | 2—0.5 | 24.0 | 24.0 | 26.7 | 26.7 | 26.7 | 26.7 | 26.7 | |
| | 0.5—0.1 | 20.0 | 20.0 | 22.2 | 22.2 | 22.2 | 22.2 | 22.2 | 22.2 |
| | 0.1—0.063 | 4.0 | 4.0 | 2.2 | 2.2 | 2.2 | 2.2 | 2.2 | 2.2 |
| | less than 0.063 | 16.0 | 16.0 | 8.9 | 8.9 | 8.9 | 8.9 | 8.9 | 8.9 |
| Graphite | | 2.8 | 13.2 | 9.76 | 9.76 | 9.74 | 9.54 | 9.72 | 9.76 |
| Carbon black | | — | — | — | 0.49 | 0.49 | 0.48 | 0.49 | 0.49 |
| Acetone | | — | — | — | — | 0.49 | — | — | — |
| Xylene/butanol (4:1 pbw) | | — | — | — | — | — | 0.48 | 0.37 | — |
| Binder composition | Type | A | B | C | A | A | D | E | F |
| | Amount | 6.5 | 6.5 | 2.44 | 1.95 | 1.95 | 3.8 | 1.94 | 1.95 |
| Bulk density (g/ml) | | 2.95 | 2.76 | 2.83 | 2.86 | 2.94 | 2.95 | 2.92 | 3.02 |
| Cold crushing strength (MPa) | | 60 | 25 | 41 | 27 | 32 | 36 | 46 | 41 |
| Residual carbon content (%) | | 10.6 | 14.9 | 8.6 | 9.0 | 9.1 | 9.2 | 10.1 | 10.7 |
| Weight loss on ignition (%) | | 15.4 | 21.4 | 11.3 | 10.5 | 10.3 | 12.5 | 11.7 | 11.5 |
| Apparent carbon yield (%) | | 65.2 | 64.0 | 75.5 | 83.9 | 87.2 | 71.2 | 84.5 | 82.0 |

Binder composition type A is a blend of 100 parts by weight "Epikote 213" ("Epikote" is a registered Trade Mark) with 50 parts by weight "Epikure·DX-160" ("Epikure" is a registered Trade Mark).

Binder composition type B is a blend of 100 parts by weight "Epikote 215" with 40 parts by weight triethylenetetramine.

Binder composition type C is a blend of 100 parts by weight "Epikote 816" with 40 parts by weight "Epikure 114".

Binder composition type D is a blend of 50 parts by weight binder composition type A with 50 parts by weight "white" coal tar (as low-volatile liquid extender).

Binder composition type E is a blend of 48 parts by weight "Cardura LR 33" with 52 parts by weight "Desmodur L75".

Binder composition type F is a blend of 66 parts by weight "Nourypol 200" with 34 parts by weight "Desmodur VL".

"Epikote 213", "Epikure DX-160", "Epikote 215", "Epikote 816", "Epikure 114", "Cardura E", and "Cardura LR33", are all products which are commercially available from the Royal Dutch/Shell group of companies.

"Desmodur L75" and "Desmodur VL" are both products which are commercially available from Bayer A.G.

"Nourypol 200" is a product which is commercially available from AKZO Chemie B.V.

"Epikote 213" is a low viscosity modified bisphenol A-epichlorohydrin epoxide resin, having epoxy group content 4760—5260 mmol/kg and viscosity at 25°C of 0.7 to 1.1 Pa s.

"Epikure DK-160" is a modified amine curing agent and is based on 4,4'-diaminodiphenyl methane, having a basic nitrogen content of 7.5—8.0% wt and viscosity at 25°C of 0.5 Pa s.

"Epikote 215" is a low viscosity modified bisphenol A-epichlorohydrin epoxide resin, having epoxy group content 4760—5260 mmol/kg and viscosity at 25°C of 5 to 6 Pa s.

"Epikote 816" is a low viscosity modified bisphenol A-epichlorohydrin epoxide resin, having epoxy group content 4650—5130 mmol/kg and viscosity at 25°C of 1.5 to 2.1 Pa s.

"Epikure 114" is a low viscosity modified cycloaliphatic amine curing agent, having a basic nitrogen content 10.0—11.0% wt and viscosity at 25°C of 15 to 30 mPa s.

"Cardura LR 33" is an alkyd resin prepared by single step reaction of phthalic anhydride, "Cardura E" and trimethylol propane in 5:2:4 molar ratio. "Cardura E" is the glycidyl ester of saturated aliphatic monocarboxylic acids which contain ten carbon atoms and in which the alpha carbon atom is attached to three straight chain alkyl groups, at least one of which is always methyl.

"Nourypol 200" is a polyester/polyether, hydroxyl-rich, alkyd-type resin, having a hydroxyl content of 5:8 to 6:1% wt and a viscosity at 20 to 25°C of 0.3 to 0.5 Pa s.

"Desmodur L75" is a 75% wt solution in ethyl acetate of toluene diisocyanate and trimethylol propane in 3:1 molar ratio.

"Desmodur VL" is diphenylmethanediisocyanate.

"White" coal tar is an aromatic coal tar distillate ex Cindu Chemie B.V.

The refractory elements of Examples 1 to 5 above in the form of refractory bricks 10 cm×80 cm×12 cm can be seen from Table 1 to have excellent suitability for mounting in a refractory wall of a steel converter. The cured resin matrix is carbonized during burning in, in which the bricks are typically subjected to temperature rises of the order of 1000 to 1200°C in 2 to 3 hours, and during subsequent use of the converter, to give a refractory lining with an excellent carbon skeleton. The bricks are mechanically stable during preheating, and by contrast with conventional coal tar or pitch based bricks, no tempering (heating at 200 to 350°C) of the bricks is needed prior to incorporation of the bricks in the refractory wall. Since mixing of the refractory compositions and moulding and curing of the refractory elements was effected at ambient temperature, the processes of Examples 1 to 8 have the clear advantages over prior art processes that of avoiding the need for heating apparatus and requiring significantly lower energy input.

## Claims

1. A process for the manufacture of tiles or bricks for the lining of furnaces by mixing a refractory composition containing a refractory material and a resin binder, moulding the refractory elements from the refractory composition and curing within the temperature range 0 to 40°C, wherein the binder comprises components of a liquid binder composition which is curable at a temperature in the range 0 to 40°C, characterized in that the refractory composition comprises magnesia and graphite and in that the binder comprises a liquid epoxy resin and an amine hardener with at least two amino hydrogen atoms per molecule or a combination of a polyhydroxy compound and a reactive polyisocyanate.

2. A process according to claim 1, wherein the refractory material is magnesia or dolomite.

3. A process according to claim 1, wherein the refractory composition contains carbon black.

4. A process according to claim 1, wherein the refractory composition contains an organic solvent which is compatible with the components of the liquid binder composition.

5. A process according to claim 4, wherein the solvent is selected from ketones, alcohols, esters, glycol ethers, aromatic solvents and homogeneous mixtures thereof.

6. A process according to claim 1, wherein the refractory composition contains 99 to 47.5% wt of the refractory material, up to 35% wt of graphite, 0 to 5% wt of carbon black, 1 to 10% wt of the components of the liquid binder composition and 0 to 2.5% wt of an organic solvent which is compatible with the components of the liquid binder composition, provided that the amount of organic solvent is from 0 to 25% wt based on the weight of the components of the liquid binder composition.

## Patentansprüche

1. Verfahren zur Herstellung von Fliesen oder Steinen für die Auskleidung von Öfen durch Vermischen einer ein feuerfestes Material und ein Harzbindemittel enthaltenden feuerfesten Zusammensetzung, Formen von feuerfesten Elementen aus der feuerfesten Zusammensetzung und Härten im Temperaturbereich von 0 bis 40°C, worin das Bindemittel Komponenten einer flüssigen Bindemittelzusammensetzung umfaßt, die bei einer Temperatur im Bereich von 0 bis 40°C härtbar ist, dadurch gekennzeichnet, daß die .feuerfeste Zusammensetzung Magnesia und Graphit umfaßt und daß das Bindemittel ein flüssiges Epoxyharz und einen Aminhärter mit wenigstens zwei Aminowasserstoffatomen je Molekül oder eine Kombination aus einer Polyhydroxyverbindung und einem reaktionsfähigen Polyisocyanat umfaßt.

2. Verfahren nach Anspruch 1, worin das feuerfeste Material Magnesia oder Dolomit ist.

3. Verfahren nach Anspruch 1, worin die feuerfeste Zusammensetzung Kohlenstoffruß enthält.

4. Verfahren nach Anspruch 1, worin die feuerfeste Zusammensetzung ein organisches Lösungsmittel enthält, das mit den Komponenten der flüssigen Bindemittelzusammensetzung verträglich ist.

5. Verfahren nach Anspruch 4, worin das Lösungsmittel unter Ketonen, Alkoholen, Estern, Glycolethern, aromatischen Lösungsmitteln und homogenen Mischungen hievon ausgewählt ist.

6. Verfahren nach Anspruch 1, worin die feuerfeste Zusammensetzung 99 bis 47,5 Gew.-% feuerfestes Material, bis zu 35 Gew.-% Graphit, 0 bis 5 Gew.-% Kohlenstoffruß, 1 bis 10 Gew.-% Komponenten der flüssigen Bindemittelzusammensetzung und 0 bis 2,5 Gew.-% eines organischen Lösungsmittels, das mit den Komponenten der flüssigen Bindemittelzusammensetzung verträglich ist, enthält, mit der Maßgabe, daß die Menge an organischem Lösungsmittel von 0 bis 25 Gew.-%, bezogen auf das Gewicht der Komponenten der flüssigen Bindemittelzusammensetzung, beträgt.

## Revendications

1. Procédé de fabrication de carreaux ou de briques servant à fabriquer des contre-murs de fours, par mélange d'une composition réfractaire contenant un matériau réfractaire et un liant de type résine, moulage de la composition réfractaire pour donner des éléments réfractaires et durcissement dans l'intervalle de températures de 0 à 40°C, procédé dans lequel le liant comprend des constituants d'une composition liante liquide qui est durcissable à une température dans l'intervalle de 0 à 40°C, caractérisé en ce que la composition réfractaire comprend de la magnésie et du graphite et en ce que le liant comprend une résine époxyde liquide et un durcisseur de type amine comportant au moins 2 atomes d'hydrogène de fonction amine par molécule ou une combinaison d'un composé polyhydroxylé et d'un polyisocyanate réactif.

2. Procédé selon la revendication 1, dans lequel le matériau réfractaire est de la magnésie ou de la dolomite.

3. Procédé selon la revendication 1, dans lequel la composition réfractaire contient du noir de carbone.

4. Procédé selon la revendication 1, dans lequel la composition réfractaire contient un solvant organique qui est compatible avec les constituants de la composition liante liquide.

5. Procédé selon la revendication 4, dans lequel le solvant est choisi parmi des cétones, des alcools, des esters, des éthers de glycol, des solvants aromatiques et des mélanges homogènes de ceux-ci.

6. Procédé selon la revendication 1, dans lequel la composition réfractaire contient 99 à 47,5% en poids du matériau réfractaire, jusqu'à 35% en poids de graphite, 0 à 5% en poids de noir de carbone, 1 à 10% en poids des constituants de la composition liante liquide et 0 à 2,5% en poids d'un solvant organique compatible avec les constituants de la composition liante liquide, à condition que la quantité de solvant organique soit de 0 à 25% en poids, par rapport au poids des constituants de la composition liante liquide.